(19) **Europäisches Patentamt / European Patent Office / Office européen des brevets**

(11) **EP 1 840 154 A1**

(12) **EUROPEAN PATENT APPLICATION**
published in accordance with Art. 158(3) EPC

(43) Date of publication:
**03.10.2007 Bulletin 2007/40**

(51) Int Cl.:
**C08J 3/12** (2006.01)   **C08F 6/22** (2006.01)

(21) Application number: **05816769.3**

(22) Date of filing: **13.12.2005**

(86) International application number:
**PCT/JP2005/022816**

(87) International publication number:
**WO 2006/070590 (06.07.2006 Gazette 2006/27)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.12.2004 JP 2004375967**

(71) Applicant: **Kaneka Corporation
Kita-ku
Osaka-shi, Osaka 530-8288 (JP)**

(72) Inventor: **UEDA, Takashi
Hyogo (JP)**

(74) Representative: **Vossius & Partner
Siebertstrasse 4
81675 München (DE)**

(54) **PROCESS FOR PRODUCING AGGREGATED LATEX PARTICLE**

(57)   An object of the present invention is to provide a new granulating process in which a polymer latex can be recovered as coagulated latex particles having an extremely low fine particle content, an extremely low coarse particle content, and satisfactory powder properties such as blocking resistance and powder flowability, without deteriorating the original quality of the polymer itself. A process for producing coagulated latex particles includes spraying or dropping a polymer latex containing a water-soluble polymer compound having a physical gel-forming property into a gas-phase containing an inorganic salt and/or an acid in an aerosol form, and dropping or feeding the droplets of the polymer latex into an aqueous phase.

EP 1 840 154 A1

**Description**

Technical Field

The present invention relates to a process for producing coagulated latex particles. In more detail, the present invention relates to a process for producing coagulated latex particles from a polymer latex containing a water-soluble polymer compound having a physical gel-forming property.

Background Art

In order to recover a desired polymer contained in a latex from a polymer latex prepared by emulsion polymerization or suspension polymerization, granulating processes for coagulating and granulating the latex are required. The granulating processes significantly affect the powder properties, such as shape of particles, particle size distribution, fine particle content, coarse particle content, powder flowability, and blocking resistance, of recovered particles.

In general, polymers are recovered from polymer latices by the following procedure: A coagulant is added to a polymer latex at a temperature sufficiently lower than the softening temperature of the polymer to form coagulated latex particles. The resulting mixture is then heated to at least the softening temperature of the polymer to produce slurry, followed by dehydrating and drying. Thus, a powdered polymer is recovered. However, for example, this process produces a large number of excessively fine particles and excessively coarse particles whose particle size is out of the range of an intended particle size and, in addition, the resulting powder has irregular shape. Accordingly, in many cases, it is difficult to obtain a powder having satisfactory powder properties.

Various granulating processes have been developed to produce coagulated latex particles having satisfactory powder properties from a polymer latex. A gas-phase coagulation process (for example, see Patent Document 1), a moderate coagulation process (for example, see Patent Document 2), a granulating process using a spray dryer, and the like are widely known. It is known that, among these, the gas-phase coagulation process can particularly provide substantially spherical coagulated latex particles having satisfactory powder properties because substantially spherical polymer latex droplets sprayed or dropped in a gas-phase are brought into contact with a coagulant in the gas-phase to complete the coagulation.

However, in order to produce satisfactory coagulated latex particles by the gas-phase coagulation process, a sufficient distance must be provided in the gas-phase part in which polymer latex droplets drop. Therefore, it is inevitable that the apparatus has a large dimension in the height direction, thus causing problems of the significant increase in the equipment cost, the difficulties in operation and maintenance, and the like.

In addition to the above granulating techniques, as a process for granulating a rubbery polymer latex having a softening temperature of the polymer of room temperature or lower, which is extremely difficult to be recovered in a powder form, a process of adding a high-molecular weight polyanion having a carboxyl group and/or a hydroxyl group in its molecule to a rubber latex, and dropping the mixed latex into an aqueous solution containing at least one alkaline earth metal is known (for example, see Patent Document 3).

In this process, however, for example, at least 2 to 8 parts by weight and preferably 4 to 6 parts by weigh of the high-molecular weight polyanion must be added relative to 100 parts by weight of rubber solid content of the rubber latex, the viscosity of the resulting mixed latex must be adjusted to 200 to 8,000 mPa·s, and subsequently the latex must be dropped from 1 to 80 cm higher than the liquid level of a coagulant. Thus, according to the description of this process, satisfactory spherical coagulated latex particles cannot be produced unless many conditions are satisfied.

In general, it is easily assumed that the addition of 2 parts by weight or more of a high-molecular weight polyanion to a polymer latex causes the following problems, and thus this is not a satisfactory process. Examples of the problems are as follows: (1) The original quality (for example, thermal stability) of a recovered polymer itself used for various purposes may be deteriorated; (2) The addition of a large amount of high-molecular weight polyanion leads to the significant increase in the production cost; and (3) Since the viscosity of the latex, which is generally 10 mPa·s or less, must be adjusted to 200 mPa·s or more and preferably 1,000 mPa·s or more by adding the high-molecular weight polyanion, the transferring property of the resulting latex liquid is impaired.

In other words, under the present situation, the development of a granulating technique that can satisfy the production cost, the quality, the production technique, and the equipment cost, at high level has been expected in the field of granulating technique of polymer latices.

Patent Document 1: Japanese Unexamined Patent Application Publication No. 53-30647

Patent Document 2: Japanese Unexamined Patent Application Publication No. 60-217224

Patent Document 3: Japanese Unexamined Patent Application Publication No. 52-37987

Disclosure of Invention

Problems to be Solved by the Invention

In order to provide the above problems with a solution, it is an object of the present invention to provide a new granulating process in which a polymer latex can be recovered as coagulated latex particles having an extremely low fine particle content, an extremely low coarse particle content, and satisfactory powder properties such as blocking resistance and powder flowability, without deteriorating the original quality of the polymer itself.

Means for Solving the Problems

In view of the above present situation, the present inventors have conducted intensive research and found that coagulated latex particles having satisfactory powder properties can be produced by spraying or dropping a polymer latex containing a water-soluble polymer compound having a physical gel-forming property into a gas-phase containing an inorganic salt and/or an acid in an aerosol form, and dropping or feeding the droplets of the polymer latex into an aqueous phase. Consequently, the present invention has been accomplished.

The present invention relates to a process for producing coagulated latex particles including spraying or dropping a polymer latex containing a water-soluble polymer compound having a physical gel-forming property into a gas-phase containing an inorganic salt and/or an acid in an aerosol form, and dropping or feeding the droplets of the polymer latex into an aqueous phase.

A preferred embodiment relates to the above-described process for producing coagulated latex particles, wherein the polymer latex containing a water-soluble polymer compound having a physical gel-forming property includes a polymer latex containing 100 parts by weight of the polymeric solid content and 0.01 to 1.8 parts by weight of the water-soluble polymer compound having a physical gel-forming property.

A preferred embodiment relates to the process for producing coagulated latex particles described in any one of the above processes, wherein the water-soluble polymer compound having a physical gel-forming property is at least one compound selected from hydroxyethylmethylcellulose, hydroxypropylmethylcellulose, carboxymethylcellulose, water-soluble alginic acid derivatives, agar, gelatin, carrageenan, glucomannan, pectin, curdlan, gellan gum, and polyacrylic acid derivatives.

A preferred embodiment relates to the process for producing coagulated latex particles described in any one of the above processes, wherein the gas-phase contains 0.2 to 20 parts by weight of the inorganic salt and/or the acid relative to 100 parts by weight of the polymeric solid content.

A preferred embodiment relates to the process for producing coagulated latex particles described in any one of the above processes, wherein the inorganic salt is at least one salt selected from sodium salts, potassium salts, calcium salts, magnesium salts, aluminum salts, iron salts, barium salts, zinc salts, copper salts, potassium alum, and iron alum.

A preferred embodiment relates to the process for producing coagulated latex particles described in any one of the above processes, wherein the acid is at least one inorganic acid selected from hydrochloric acid, sulfuric acid, nitric acid, and phosphoric acid and/or at least one organic acid selected from acetic acid and formic acid.

A preferred embodiment relates to the above-described process for producing coagulated latex particles, wherein the water-soluble polymer compound having a physical gel-forming property is a water-soluble alginic acid derivative.

A preferred embodiment relates to the above-described process for producing coagulated latex particles, wherein the inorganic salt is a calcium salt.

A preferred embodiment relates to the process for producing coagulated latex particles described in any one of the above processes, wherein the distance between the spraying or dropping position of the polymer latex and the liquid level of the aqueous phase is 1 m or more.

A preferred embodiment relates to the process for producing coagulated latex particles described in any one of the above processes, wherein the polymer latex sprayed or dropped into the gas-phase has a volume-average droplet size of 50 $\mu$m to 5 mm.

A preferred embodiment relates to the process for producing coagulated latex particles described in any one of the above processes, wherein the polymer latex has a polymeric solid content of 10 to 55 percent by weight.

Effects of the Invention

The process for producing coagulated latex particles of the present invention can achieve the production of coagulated latex particles having a low fine particle content, a low coarse particle content, and satisfactory powder properties such as blocking resistance and powder flowability, without significantly increasing the production cost and the equipment cost, compared with known granulating processes.

Best Mode for Carrying Out the Invention

The polymer latex in the present invention is not particularly limited. For example, polymer latices produced by emulsion polymerization, suspension polymerization, microsuspension polymerization, miniemulsion polymerization, or aqueous dispersion polymerization can be used. Among these, from the viewpoint that coagulated latex particles having satisfactory powder properties can be obtained, polymer latices produced by emulsion polymerization are preferably used.
Examples of the polymer particles included in the polymer latex produced by emulsion polymerization include:

(1) a polymer prepared by polymerization of 50 to 100 percent by weight of an acrylate ester, 0 to 40 percent by weight of an aromatic vinyl monomer, 0 to 10 percent by weight of a vinyl monomer copolymerizable with the acrylate ester and the aromatic vinyl monomer, and 0 to 5 percent by weight of a multifunctional monomer, and then by graft polymerization of 50 to 100 parts by weight of the solid content in the resulting rubber latex having a volume-average particle size of 0.01 to 15.0 $\mu$m and a glass transition temperature of 0°C or lower with 0 to 50 parts by weight of a monomeric mixture containing 0 to 100 percent by weight of a (meth)acrylate ester, 0 to 90 percent by weight of an aromatic vinyl monomer, 0 to 25 percent by weight of a vinyl cyanide monomer, and 0 to 20 percent by weight of a vinyl monomer copolymerizable with the (meth)acrylate ester, the aromatic vinyl monomer, and the vinyl cyanide monomer;
(2) a polymer prepared by emulsion polymerization of 60 to 100 parts by weight of a mixture containing 50 to 95 percent by weight of methyl methacrylate, 5 to 50 percent by weight of a methacrylate ester containing an alkyl group having 2 to 8 carbon atoms, and 0 to 20 percent by weight of a vinyl monomer copolymerizable with the methyl methacrylate and the methacrylate ester, and then by polymerization of, in the presence of the resulting polymer latex having a volume-average particle size of 0.01 to 15.0 $\mu$m, 0 to 40 parts by weight of a mixture containing 20 to 80 percent by weight of methyl methacrylate, 20 to 80 percent by weight of at least one monomer selected from acrylate esters and methacrylate esters other than methyl methacrylate, and 0 to 20 percent by weight of a vinyl monomer copolymerizable with the methyl methacrylate and the monomer, the total amount being 100 parts by weight; and (3) a polymer prepared by polymerization of 50 to 100 percent by weight of butadiene, 0 to 40 percent by weight of an aromatic vinyl monomer, 0 to 10 percent by weight of a vinyl monomer copolymerizable with butadiene and the aromatic vinyl monomer, and 0 to 5 percent by weight of a multifunctional monomer, and then by graft polymerization of 50 to 95 parts by weight of the solid content of the resulting rubber latex having a volume-average particle size of 0.01 to 15.0 $\mu$m and a glass transition temperature of 0°C or lower with 5 to 50 parts by weight of a monomeric mixture containing 10 to 100 percent by weight of a methacrylate ester, 0 to 90 percent by weight of an aromatic vinyl monomer, 0 to 25 percent by weight of a vinyl cyanide monomer, and 0 to 20 percent by weight of a vinyl monomer copolymerizable with the methacrylate ester, the aromatic vinyl monomer, and the vinyl cyanide monomer. Any one of these polymers can be preferably used because of a reason described below.

Typical processes for producing such polymer particles in polymer latices described in the above (1) to (3) are described in detail in, for example, Japanese Unexamined Patent Application Publication Nos. 2002-363372, 11-166091, and 2001-354824, but are not limited to these.
The polymer latices described in (1) to (3) above are preferably used because such polymer latices have been widely used as quality modifiers for thermoplastic resins, and their various effects of improving quality can be exhibited even when the polymer latices are recovered as coagulated latex particles of the present invention. However, polymer latices usable in the present invention are not limited to these. For example, polymer particles in a latex prepared by copolymerization or graft polymerization of a monomer composition mainly composed of at least one monomer selected from the following monomer group may be used alone or as a mixture. Examples of the monomer group include (1) alkyl acrylates containing an alkyl group having up to 10 carbon atoms, for example, methyl acrylate, ethyl acrylate, butyl acrylate, and 2-ethylhexyl acrylate; (2) alkyl methacrylates containing an alkyl group having up to 10 carbon atoms, for example, methyl methacrylate, ethyl methacrylate, butyl methacrylate, and 2-ethylhexyl methacrylate; (3) vinylarenes such as styrene, $\alpha$-methylstyrene, monochlorostyrene, and dichlorostyrene; (4) vinylcarboxylic acids such as acrylic acid and methacrylic acid; (5) vinyl cyanides such as acrylonitrile and methacrylonitrile; (6) vinyl halides such as vinyl chloride, vinyl bromide, and chloroprene; (7) vinyl acetate; (8) alkenes such as ethylene, propylene, butylene, butadiene, and isobutylene; and (9) multifunctional monomers such as allyl methacrylate, diallyl phthalate, triallyl cyanurate, monoethylene glycol dimethacrylate, tetraethylene glycol dimethacrylate, divinylbenzene, and glycidyl methacrylate.
The average particle size of the polymer particles is not particularly limited. However, polymer particles having a volume-average particle size of 0.01 to 15 $\mu$m, which is the particle size in typical emulsion polymerization, suspension polymerization, or the like, can be preferably used. The volume-average particle size of the polymer particles may be measured with, for example, a MICROTRAC UPA (manufactured by NIKKISO Co., Ltd.).
The polymeric solid content in the polymer latex in the present invention is not particularly limited as long as an object of the present invention is achieved but is preferably 10 to 55 percent by weight and more preferably 20 to 45 percent by weight. When the polymeric solid content in the polymer latex is less than 10 percent by weight, a large amount of water is necessary in order to reduce the solid content from 30 to 40 percent by weight, which is a polymeric solid content after typical emulsion polymerization or suspension polymerization, to less than 10 percent by weight. Consequently, the load in wastewater treatment is increased. On the other hand, a solid content of the polymer latex exceeding 55 percent by weight does not particularly affect the granulation operation of the present invention. However, in such a case, the polymerization operation tends to be difficult. For example, the heat generation in polymerization is difficult to be controlled or a scale is frequently produced in a polymerization tank. The polymeric solid content in a polymer latex can be measured by placing 0.5 g of the latex in a hot air convection dryer at 120°C for 3 hours to volatilize moisture and then calculating the polymeric solid content in the latex from the weights of the latex before drying and the polymer after drying.

In the present invention, the polymer latex must contain a water-soluble polymer compound having a physical gel-forming property. Herein, the term "physical gel" means a gel containing a physical crosslinking formed by a hydrogen bond, an ionic bond, or the formation of a chelate between polymer molecules. The phrase "having a physical gel-forming property" means that the change from a viscous fluid (sol) to an elastomer (gel) can be visually observed when an operation for gelation, for example, the addition of an inorganic salt or an acid or heating, is performed to an aqueous solution containing only a water-soluble polymer compound. The term "water-soluble polymer compound having a physical gel-forming property" is defined as a water-soluble polymer compound having the above property.

The water-soluble polymer compound having a physical gel-forming property usable in the present invention is not particularly limited as long as the above property can be exhibited. For example, a water-soluble polymer compound composed of a compound or a mixture containing two or more compounds selected from the following group can be used. Examples thereof include water-soluble alginic acid derivatives such as alginic acid, sodium alginate, potassium alginate, and ammonium alginate; hydroxyethylmethylcellulose; hydroxypropylmethylcellulose; carboxymethylcellulose; agar; gelatin; carrageenan; glucomannan; pectin; curdlan; gellan gum; and polyacrylic acid derivatives. In order to achieve the object of the present invention, among these, carboxymethylcellulose, water-soluble alginic acid derivatives, and polyacrylic acid derivatives are more preferable. Among these, water-soluble alginic acid derivatives are most preferably used.

Examples of the water-soluble alginic acid derivatives include alginic acid, sodium alginate, potassium alginate, and ammonium alginate, but are not limited to these as long as the derivatives have a property of forming a physical gel by reacting with a polyvalent metal salt or an acid. The ratio between mannuronic acid and guluronic acid in the water-soluble alginic acid derivative is not particularly limited. However, higher ratio of guluronic acid is preferable because the ability of forming a physical gel tends to increase. Therefore, the ratio of guluronic acid in the water-soluble alginic acid derivative is generally at least 5 percent by weight and more preferably at least 30 percent by weight.

Also, the molecular weight of the water-soluble polymer compound represented by the above water-soluble alginic acid derivatives is not particularly limited. In view of the transferring property of the liquid during production, the viscosity of a 1.0 percent by weight aqueous solution measured with a B-type viscometer is preferably 2 to 22,000 mPa·s and more preferably 2 to 1,000 mPa·s.

A purpose of adding a water-soluble polymer compound having a physical gel-forming property to a polymer latex is to improve the shape retention of coagulated latex particles during the granulation. That is, when the polymer latex is coagulated in a gas-phase, gelation of the water-soluble polymer compound proceeds at the same time. Thereby, on the surfaces of latex droplets, a gel film is formed in competition with the coagulation of the polymer latex. As a result, the mechanical strength of the surfaces of the latex droplets increases, thus suppressing a phenomenon that the shape of spherical coagulated latex particles is changed to an irregular shape by an impact when the coagulated latex particles enter a liquid-phase from the gas-phase.

In the known gas-phase coagulation process in which a water-soluble polymer compound having a physical gel-forming property is not added, the strength of the coagulated product must be increased as much as possible in order to prevent the phenomenon that the shape of coagulated latex particles is changed to an irregular shape by an impact when the coagulated latex particles enter a liquid-phase from a gas-phase. In order to achieve this, the coagulation is preferably completed in the gas-phase. Consequently, in order to provide a sufficient time for contacting with a coagulant in the gas-phase, the granulating apparatus inevitably has a large dimension in the height direction.

In contrast, according to the present invention, since a gel film can be formed on the surfaces of the latex droplets in the gas-phase, the mechanical strength of the latex droplets increases. Thereby, even when the centers of latex droplets are not coagulated sufficiently, the coagulated latex particles have a satisfactory strength, thus suppressing the phenomenon that the shape of coagulated latex particles is changed to an irregular shape by an impact when the coagulated latex particles enter a liquid-phase from a gas-phase. Accordingly, in the granulating process of the present invention, it is sufficient that only the surfaces of latex droplets are coagulated in the gas-phase. Accordingly, the time for contacting with a coagulant in the gas-phase can be significantly reduced, compared with the case in the known gas-phase coagulation process, and the reduction in size of a granulating apparatus in the height direction can be achieved.

The content of the water-soluble polymer compound having a physical gel-forming property in the present invention is not particularly limited as long as the object of the present invention can be achieved. However, from the above-described viewpoint, the content is preferably 0.01 to 1.8 parts by weight and more preferably 0.05 to 1.5 parts by weight relative to 100 parts by weight of the polymeric solid content in a polymer latex. When the content of the water-soluble polymer compound having a physical gel-forming property in the present invention is less than 0.01 parts by weight relative to 100 parts by weight of the polymeric solid content in the polymer latex, a gel film due to the water-soluble polymer compound is not sufficiently formed on the surfaces of latex droplets sprayed or dropped in the gas-phase. Consequently, since coagulated latex particles having an irregular shape tend to be produced by an impact when the particles enter a liquid-phase, it may be difficult to obtain a powder having satisfactory powder properties. On the other hand, when the content of the water-soluble polymer compound having a physical gel-forming property exceeds 1.8 parts by weight, a large amount of substance derived from the water-soluble polymer remains in the recovered coagulated latex particles. In such a case, the quality such as thermal stability tends to be impaired. Furthermore, the viscosity of the mixed latex increases, which may result in a difficulty in handleability such as the transferring property of the liquid.

In the present invention, from the viewpoint of suppressing the phenomenon that the shape of latex droplets (coagulated latex particles) is changed to an irregular shape by an impact when the latex droplets enter a liquid-phase from a gas-phase, the minimum height from the liquid level of an aqueous phase to the spraying or dropping position of the polymer latex is preferably at least 1.0 m and more preferably at least 1.5 m. In contrast, in the known gas-phase coagulation process in which a water-soluble polymer compound having a physical gel-forming property is not used, in order to produce coagulated latex particles having satisfactory powder properties, a height of at least 6.0 m has been required. In the present invention, the maximum height of the spraying or dropping position of the polymer latex is not particularly limited. In view of the equipment cost, the maximum height is preferably up to 20 m and more preferably up to 5.5 m.

Japanese Unexamined Patent Application Publication No. 52-37987 discloses a process of adding a high-molecular weight polyanion having a carboxyl group and/or a hydroxyl group in its molecule to a rubber latex, and dropping the mixed latex into an aqueous solution containing at least one alkaline earth metal as a process for granulating a rubbery polymer latex that is extremely difficult to be recovered in a particle form.

According to the description of this process, at least 2.0 parts by weight and preferably 4.0 parts by weight of the high-molecular weight polyanion must be added to 100 parts by weight of the polymeric solid content in the rubber latex. The followings are described as the main reasons. (I) When the content of the high-molecular weight polyanion is less than 2 parts by weight, the sealing effect of the rubber by a film (gel) of an alkaline earth metal salt of the high-molecular weight polyanion is not sufficient. (II) The viscosity of the mixed latex is below the range of 1,000 to 3,000 mPa·s, which is the most preferable range, and the shape of the rubber is changed to an irregular shape by an impact when the mixed latex droplets enter a liquid-phase from a gas-phase.

According to the present invention, even when the content of the water-soluble polymer compound having a physical gel-forming property is extremely smaller than the content in the above-described invention, for example, even when the content is 0.01 to 1.8 parts by weight relative to 100 parts by weight of the polymeric solid content in the polymer latex, coagulated latex particles having satisfactory powder properties can be produced. This is probably based on the following and can be achieved only by the following: Both the coagulation of the polymer latex and the formation of a gel film proceed in a gas-phase, thereby suppressing the phenomenon that the shape of latex droplets (coagulated latex particles) is changed to an irregular shape by an impact when the latex droplets enter a liquid-phase from the gas-phase. In addition, the polymer latex containing a water-soluble polymer compound having a physical gel-forming property in the present invention generally has a viscosity of less than 200 mPa·s. Thus, the present invention is essentially different from the above-described technique in which the spherical shape of particles is maintained against collisions on the liquid level by increasing the viscosity of a mixed latex.

In the present invention, a method for adding a water-soluble polymer compound having a physical gel-forming property to the polymer latex is not particularly limited. For example, an aqueous solution of the water-soluble polymer compound may be separately prepared and a predetermined amount of the aqueous solution may be added to a polymer latex after polymerization. This method is preferable because of the simple and easy operation. However, the method is not limited to this. For example, a predetermined amount of water-soluble polymer compound in the form of aqueous solution or powder may be added to a polymer latex all together or continuously before or in the course of polymerization or the like as long as an adverse effect in polymerization process, for example, gelation is not caused.

When a water-soluble polymer compound in the form of aqueous solution is added to a polymer latex, the concentration of the aqueous solution of the water-soluble polymer compound is preferably 0.01 to 10 percent by weight. When the concentration of the aqueous solution of the water-soluble polymer compound is less than 0.01 percent by weight, a large amount of aqueous solution must be added to the polymer latex in order to add a predetermined amount of the water-soluble polymer compound, and thus the load in wastewater treatment tends to increase. On the other hand, when the concentration of aqueous solution of the water-soluble polymer compound exceeds 10 percent by weight, the viscosity of the aqueous solution of the water-soluble polymer compound is increased. In such a case, the operationality may be impaired. The mixing operation of the polymer latex and the water-soluble polymer compound is easily performed by adding an aqueous solution of the water-soluble polymer compound to the polymer latex and then wholly stirring the mixture for about a few minutes.

In the present invention, the polymer latex (hereinafter also referred to as a mixed latex) containing a water-soluble polymer compound having a physical gel-forming property is sprayed or dropped into a gas-phase and coagulation can proceed in the gas-phase while the shape of droplets in this state is maintained. The size of droplets when the mixed latex is sprayed or dropped may be freely controlled according to the supply form of dried particles, i.e., a product. The volume-average droplet size is generally 50 $\mu$m to 5 mm and preferably 100 $\mu$m to 3 mm. The size of droplets when the mixed latex is sprayed or dropped can be indirectly determined by measuring the volume-average particle size of resulting coagulated latex particles with a MICROTRAC FRA-SVRSC (manufactured by NIKKISO Co., Ltd.).

In the present invention, the mixed latex sprayed or dropped in a gas-phase is brought into contact with a coagulant capable of coagulating the latex so as to coagulate the latex. The coagulant usable in the present invention should be a substance having both properties of coagulating the latex and causing a gelation of the water-soluble polymer compound. Examples of the coagulant include aqueous solutions of inorganic salts such as sodium chloride, potassium chloride, lithium chloride, sodium bromide, potassium bromide, lithium bromide, potassium iodide, lithium iodide, potassium sulfate, ammonium sulfate, sodium sulfate, ammonium chloride, sodium nitrate, potassium nitrate, calcium chloride, ferrous sulfate, magnesium sulfate, zinc sulfate, copper sulfate, cadmium sulfate, barium chloride, ferrous chloride, magnesium chloride, ferric chloride, ferric sulfate, aluminum sulfate, potassium alum, and iron alum; aqueous solutions of inorganic acids such as hydrochloric acid, sulfuric acid, nitric acid, and phosphoric acid; organic acids such as acetic acid and formic acid and aqueous solutions of the organic acids; aqueous solutions of organic acid salts such as sodium acetate, calcium acetate, sodium formate, and calcium formate; and alcohol solutions of inorganic salts or organic acids such as methanol solutions of sodium chloride, ammonium chloride, sodium bromide, sodium iodide, potassium iodide, magnesium chloride, calcium chloride, barium chloride, magnesium sulfate, zinc sulfate, copper sulfate, acetic acid, or formic acid, and ethanol solutions of sodium chloride, sodium bromide, sodium iodide, potassium iodide, magnesium chloride, calcium chloride, ferric chloride, acetic acid, or formic acid, which may be used alone or in combinations in an aerosol form. Among these, aqueous solutions of inorganic salts such as sodium chloride, potassium chloride, ammonium sulfate, sodium sulfate, ammonium chloride, calcium chloride, ferrous sulfate, magnesium sulfate, zinc sulfate, copper sulfate, cadmium sulfate, barium chloride, ferrous chloride, magnesium chloride, ferric chloride, ferric sulfate, aluminum sulfate, potassium alum, and iron alum; aqueous solutions of inorganic acids such as hydrochloric acid, sulfuric acid, nitric acid, and phosphoric acid; and organic acids such as acetic acid and formic acid and aqueous solutions of the organic acids can be preferably used alone or in combinations of two or more coagulants in an aerosol form.

The amount of coagulant (gelling agent) used is not necessarily limited but is preferably 0.2 to 20 parts by weight and more preferably 0.5 to 15 parts by weight relative to 100 parts by weight of the polymeric solid content in polymer latex. When the amount of coagulant (gelling agent) used is less than 0.2 parts by weight relative to 100 parts by weight of the polymeric solid content in polymer latex, the latex may be coagulated insufficiently. When the amount of coagulant (gelling agent) used exceeds 20 parts by weight, the coagulation property is not affected but the amount of coagulant (gelling agent) in wastewater is increased and thus the load in wastewater treatment tends to increase.

Examples of a method for contacting the mixed latex with the coagulant (gelling agent) in the present invention include, but are not limited to, a method of continuously spraying or dropping droplets of the mixed latex into a coagulable gas-phase atmosphere in which a predetermined amount of an aqueous solution of the coagulant (gelling agent) is continuously sprayed in an aerosol form, thus bringing the mixed latex into contact with the coagulant (gelling agent). The state "aerosol form" is not particularly limited as long as the droplets are in a mist form, but droplets of the dispersing coagulant preferably have a volume-average particle size of 0.01 to 10 $\mu$m.

In the present invention, an aqueous suspension of coagulated latex particles prepared by completing granulation may be heated according to need so that aggregation between polymer particles in the coagulated latex particles is accelerated by the heat treatment. Although the heat treatment temperature does not have an upper limit, in general, the heat treatment temperature is preferably up to 120°C because the operation is simple and easy. Thereby, the mechanical strength of the coagulated latex particles further increases and, in addition, the water content decreases. In the heat treatment, a known treatment for preventing aggregation between particles may be performed in order to suppress the coagulation between particles during heating and during or after drying.

Subsequently, dehydrating and drying operations are carried out according to conventional methods. Thus coagulated latex particles of the present invention can be recovered in a powder form.

EXAMPLES

The present invention will now be described in further detail on the basis of examples, but the present invention is not limited to these examples.

(Measurement of water content after dehydration)

A suspension (100 g) (solid content: 10 percent by weight) containing coagulated latex particles prepared in each example and each comparative example was subjected to suction filtration with an aspirator for 3 minutes. Subsequently, the dehydrated resin was recovered and dried at 100°C for 12 hours in a hot air convection dryer to evaporate water. The water content after dehydration was determined by the following (equation 1):

```
Water content after dehydration (%) = [(Ww - Wd)/Ww] × 100

(equation 1)
```

wherein Ww represents the weight of the resin immediately after dehydration and before drying and Wd represents the weight of the resin after drying.

(Measurement of fine particle content)

The particle size distribution of coagulated latex particles in a suspension prepared in each example and each comparative example was measured with a MICROTRAC FRA-SVRSC (manufactured by NIKKISO Co., Ltd.). The fine particle content was determined from the cumulative frequency (%) of particles having a diameter of less than 50 $\mu$m.

(Measurement of coarse particle content)

A suspension (1,000 g) (solid content: about 10 percent by weight) containing coagulated latex particles prepared in each example and each comparative example was subjected to suction filtration with an aspirator. Subsequently, the dehydrated resin was recovered and dried at 50°C for 24 hours in a hot air convection dryer to evaporate water. The resulting dried particles were classified with a 16-mesh sieve. The coarse particle content was determined by the following (equation 2):

```
Coarse particle content (%) = [(W1)/(W1 + W2)] × 100

(equation 2)
```

wherein W1 represents the weight of the dried particles remaining on the 16-mesh sieve and W2 represents the weight of the dried particles passing through the 16-mesh sieve.

(Blocking resistance)

Dried particles (30 g) (drying condition: 50°C x 12 hours; sieve: 16-mesh pass) of coagulated latex particles prepared in each example and each comparative example were placed in a cylindrical container with a diameter of 5 cm, and a load of 0.3 kg/cm$^2$ was applied at 60°C. The particles were kept in a thermostatic chamber at 60°C for 2 hours while the load was applied. Subsequently, the particles were left to cool at 25°C for 2 hours to prepare a block. The collapse ratio of the resulting block was measured with a powder tester PT-R (manufactured by Hosokawa Micron Corporation) by applying a vibration for 60 seconds with a vibration strength of 2.2 and an opening of sieve mesh of 750 $\mu$m. The collapse ratio of the block was determined by the following (equation 3):

```
Collapse ratio (%) = [(Wa - Wb)/Wa] × 100 (equation 3)
```

wherein Wa represents the weight of the block before the vibration and Wb represents the weight of the block remaining on the sieve after the vibration.

(Flowability indices of powder)

Angle of repose, angle of fall, angle of spatula, aerated bulk density, packed bulk density, cohesion, dispersity, angle of difference, compressibility, and uniformity of dried particles (drying condition: 50°C x 12 hours; sieve: 16-mesh pass) of coagulated latex particles prepared in each example and each comparative example were measured with a powder tester PT-R (manufactured by Hosokawa Micron Corporation) in accordance with the Carr's method for evaluating flowability (Chemical Engineering, 1965, Vol. 18, pp. 163-168). The degree of flowability was determined from the resulting flowability indices.

(Preparation of polymer latex A)

Deionized water (130 parts by weight) and sodium lauryl sulfate (0.043 parts by weight) were fed in a glass reactor equipped with a thermometer, a stirrer, a reflux condenser, an inlet for a nitrogen gas, and a unit for adding a monomer and an emulsifier, and the mixture was heated to 50°C with stirring in a nitrogen flow. Subsequently, a mixture of butyl acrylate (hereinafter also referred to as BA) (8.5 parts by weight) and cumene hydroperoxide (0.02 parts by weight) was fed. After 10 minutes, a mixed solution containing disodium ethylenediaminetetraacetate (0.01 parts by weight), ferrous sulfate heptahydrate (0.2 parts by weight), and distilled water (5 parts by weight); and sodium formaldehyde sulfoxylate (0.2 parts by weight) were fed. After the resulting mixture was stirred for 1 hour, a monomeric mixture containing BA (80.5 parts by weight), allyl methacrylate (hereinafter also referred to as AMA) (0.42 parts by weight), and cumene hydroperoxide (0.01 parts by weight) was added dropwise to the mixture over a period of 5 hours. Furthermore, during the addition of the monomeric mixture, an aqueous solution of 5 percent by weight sodium lauryl sulfate, the aqueous solution containing 1 part by weight of sodium lauryl sulfate, was continuously added over a period of 4 hours. After the monomeric mixture was added, stirring was continued for 1.5 hours to prepare a crosslinked acrylic rubber polymer. A mixture containing methyl methacrylate (hereinafter also referred to as MMA) (11 parts by weight) and cumene hydroperoxide (0.01 parts by weight), which serve as monomeric components used for graft polymerization, was continuously added to the crosslinked acrylic rubber polymer at 50°C over a period of 30 minutes. After the addition, cumene hydroperoxide (0.1 parts by weight) was added and stirring was continued for 1 hour to complete polymerization. Thus, a polymer latex A having a volume-average particle size of 0.175 $\mu$m and a polymeric solid content of 40 percent by weight, the softening temperature of the polymer being 40°C, was prepared.

(Preparation of polymer latex B)

Deionized water (200 parts by weight), potassium palmitate (0.08 parts by weight), and sodium sulfate (0.01 parts by weight) were fed in a reactor equipped with a stirrer. Nitrogen purging was performed and the mixture was then heated to 70°C. Potassium persulfate (0.1 parts by weight) was added and the resulting mixture was stirred for 30 minutes. Subsequently, a monomeric mixture containing methyl methacrylate (80 parts by weight) and butyl acrylate (20 parts by weight) was continuously added over a period of 4 hours. During the addition, potassium palmitate (0.4 parts by weight each) was added at 30, 60, 90, and 120 minutes after the addition of the monomeric mixture was started. After the addition of the monomeric mixture, the resulting mixture was maintained at the same temperature for 1.5 hours to complete polymerization. Thus, a polymer latex B having a volume-average particle size of 0.138 $\mu$m and a polymeric solid content of 32 percent by weight, the softening temperature of the polymer being 70°C, was produced.

(Preparation of polymer latex C)

Deionized water (200 parts by weight), sodium soap produced from beef tallow (2 parts by weight), ferrous sulfate (0.002 parts by weight), disodium ethylenediaminetetraacetate (0.005 parts by weight), potassium tertiary phosphate (0.2 parts by weight), sodium formaldehyde sulfoxylate (0.2 parts by weight), butadiene (80 parts by weight), styrene (20 parts by weight), and diisopropylbenzene hydroperoxide (0.1 parts by weight) were fed in a pressure-resistant polymerization container equipped with a stirrer, and polymerized was performed at 40°C for 15 hours. Thus, a rubber latex with a rate of polymerization conversion of 99% was prepared. The resulting rubber latex (227 parts by weight) (solid content: 75 parts by weight), water (25 parts by weight), sodium soap produced from beef tallow (0.2 parts by weight), ferrous sulfate (0.002 parts by weight), disodium ethylenediaminetetraacetate (0.004 parts by weight), sodium formaldehyde sulfoxylate (0.1 parts by weight), methyl methacrylate (12.5 parts by weight), and styrene (12.5 parts by weight) were fed in a polymerization container equipped with a stirrer, and polymerized was performed at 60°C for 4 hours. Thus, a polymer latex C with a rate of polymerization conversion of 99% and a polymeric solid content of 36 percent by weight, the softening temperature of the polymer being 70°C, was produced.

(EXAMPLE 1)

An aqueous solution of sodium alginate (Algitex LL, manufactured by Kimica Corporation) (having an aqueous solution viscosity of 120 mPa·s measured with a B-type viscometer) with a concentration of 1.5 percent by weight was added to the polymer latex A (polymeric solid content: 100 parts by weight) so that the solid content of sodium alginate was 0.4 parts by weight relative to 100 parts by weight of the polymeric solid content. The mixture was stirred for 3 minutes to prepare a mixed latex. The mixed latex at 25°C was sprayed as droplets each having a volume-average droplet size of 200 $\mu$m into a cylindrical apparatus having a diameter of 60 cm with a spiral flow-type cone nozzle, which is one of pressure nozzles. A nozzle diameter of 0.6 mm was used and the spraying pressure was 3.7 kg/cm$^2$. The spray was performed at a height of 5 m from the liquid level at the bottom of the tower. At the same time, an aqueous solution of calcium chloride with a concentration of 30 percent by weight was sprayed as droplets each having a droplet size of 0.1 to 10 $\mu$m using a two-fluid nozzle while the aqueous solution was mixed with air so that the solid content of calcium chloride was 5 to 15 parts by weight relative to 100 parts by weight of the polymeric solid content. The droplets of the mixed latex dropped into the tower were fed in a receiving tank at the bottom, the tank containing an aqueous solution of calcium chloride at 30°C with a concentration of 1.0 percent by weight, and were then recovered.

An aqueous solution of potassium palmitate with a concentration of 5 percent by weight was added to the resulting aqueous solution of coagulated latex particles so that the solid content of potassium palmitate was 1.0 part by weight relative to 100 parts by weight of the polymeric solid content. The mixture was heated at 70°C with stirring to perform a heat treatment. Subsequently, the mixture was dehydrated and dried (50°C x 12 hours) to recover the coagulated latex particles.

(EXAMPLE 2)

The process was performed as in Example 1 except that the amount of sodium alginate was changed so that the solid content was 0.01 parts by weight relative to 100 parts by weight of the polymeric solid content.

(EXAMPLE 3)

The process was performed as in Example 1 except that the amount of sodium alginate was changed so that the solid content was 1.8 parts by weight relative to 100 parts by weight of the polymeric solid content.

(EXAMPLE 4)

The process was performed as in Example 1 except that the spraying position of the mixed latex was set to 1 m from the liquid level at the bottom of the tower.

(EXAMPLE 5)

The process was performed as in Example 1 except that the polymer latex B was used.

(EXAMPLE 6)

Deionized water (200 parts by weight), sodium oleate (0.5 parts by weight), ferrous sulfate (0.002 parts by weight), disodium ethylenediaminetetraacetate (0.005 parts by weight), and sodium formaldehyde sulfoxylate (0.2 parts by weight) were fed in a polymerization container equipped with a stirrer and the mixture was heated to 60°C. Subsequently, a mixed solution containing methyl methacrylate (55 percent by weight), styrene (40 percent by weight), 1,3-butyleneglycol dimethacrylate (5 percent by weight) (100 parts by weight of monomers), and cumene hydroperoxide (0.3 parts by weight) was continuously added over a period of 7 hours. During the addition, sodium oleate (0.5 parts by weight each) was added at 2, 4, and 6 hours later. After the completion of the addition of the monomeric mixed solution, postpolymerization was performed for 2 hours. Thus, a crosslinked polymer latex with a rate of polymerization conversion of 99% and a polymeric solid content of 33 percent by weight was produced.

An aqueous solution of sodium alginate (Algitex LL, manufactured by Kimica Corporation) (having an aqueous solution viscosity of 120 mPa·s measured with a B-type viscometer) with a concentration of 1.5 percent by weight was added to the polymer latex C (polymeric solid content: 100 parts by weight) so that the solid content of sodium alginate was 0.4 parts by weight relative to 100 parts by weight of the polymeric solid content. The mixture was stirred for 3 minutes to prepare a mixed latex. The mixed latex at 25°C was sprayed as droplets each having a volume-average droplet size of 200 $\mu$m into an atmosphere containing 0.01 to 0.8 volume percent of hydrogen chloride gas in a cylindrical apparatus having a diameter of 60 cm with a spiral flow-type cone nozzle, which is one of pressure nozzles. A nozzle diameter of 0.6 mm was used and the spraying pressure was 3.7 kg/cm$^2$. The spray was performed at a height of 5 m from the liquid level at the bottom of the tower. The droplets of the mixed latex dropped into the tower were fed in a receiving tank at the bottom, the tank containing an aqueous solution of hydrochloric acid at 50°C with a pH of 2.0, and were then recovered.

The crosslinked polymer latex (4.5 parts by weight) (solid content: 1.5 parts by weight) and a 1 percent by weight emulsified dispersion liquid (30 parts by weight) of glycerol monobehenate (glycerol monobehenate 0.3 parts by weight and potassium rosin acid 0.1 parts by weight) were added to the resulting aqueous solution of coagulated latex particles (polymeric solid content: 100 parts by weight) with stirring. Subsequently, 25 percent by weight of sodium hydroxide was added to control the pH of the slurry to 4.0. A heat treatment was then performed at 95°C for 15 minutes. The slurry was then dehydrated and dried (50°C x 12 hours) to recover the coagulated latex particles.

(EXAMPLE 7)

The process was performed as in Example 1 except the following: In place of adding the aqueous solution of sodium alginate with a concentration of 1.5 percent by weight, an aqueous solution of hydroxypropylmethylcellulose (60SH-4000, manufactured by Shin-Etsu Chemical Co., Ltd.) (having an aqueous solution viscosity of 4,000 mPa·s measured with a B-type viscometer) with a concentration of 2.0 percent by weight was added so that the solid content of hydroxypropylmethylcellulose was 0.4 parts by weight relative to 100 parts by weight of the polymeric solid content.

(EXAMPLE 8)

The process was performed as in Example 1 except that the spraying position of the polymer latex was set to 0.5 m from the liquid level.

(EXAMPLE 9)

The process was performed as in Example 1 except that the amount of sodium alginate was changed so that the solid content was 0.005 parts by weight relative to 100 parts by weight of the polymeric solid content.

(COMPARATIVE EXAMPLE 1)

The process was performed as in Example 1 except that sodium alginate was not added.

(COMPARATIVE EXAMPLE 2)

The process was performed as in Example 1 except that the aqueous solution of calcium chloride was not sprayed along with the mixed latex and the spraying position of the mixed latex was set to 0.5 m from the liquid level.
Table 1 shows evaluation results of the water content after dehydration, the fine particle content, the coarse particle content, and the blocking resistance (collapse ratio) of the coagulated latex particles prepared in Examples 1 to 9 and Comparative Examples 1 and 2, and the particle shape by visual observation and the turbidity (by visual observation) of the supernatant of the aqueous solution in the receiving tank at the bottom of the granulating tower.

[Table 1]

| | Example 1 | Example 2 | Example 3 | Example 4 | Example 5 | Example 6 | Example 7 | Example 8 | Example 9 | Comparative Example 1 | Comparative Example 2 |
|---|---|---|---|---|---|---|---|---|---|---|---|
| Latex | A | A | A | A | B | C | A | A | A | A | A |
| Sodium alginate Parts by weight | 0.4 | 0.01 | 1.8 | 0.4 | 0.4 | 0.4 | - | 0.4 | 0.005 | Not used | 0.4 |
| Hydroxypropylmethylcellulose Parts by weight | - | - | - | - | - | - | 0.4 | - | - | - | |
| Spraying position of latex, Height from liquid level m | 5.0 | 5.0 | 5.0 | 1.0 | 5.0 | 5.0 | 5.0 | 0.5 | 5.0 | 5.0 | 0.5 |
| Spray of coagulant | Sprayed | Sprayed | Sprayed | Sprayed | Sprayed | Sprayed | Sprayed | Sprayed | Sprayed | Sprayed | Not sprayed |
| Water content % | 32 | 34 | 32 | 32 | 26 | 25 | 31 | 32 | 31 | 33 | 38 |
| Fine particles % by weight | 2.4 | 3.6 | 1.9 | 3.6 | 4.5 | 1.0 | 3.2 | 1.4 | 3.7 | 4.5 | 1.4 |
| Coarse particles % by weight | 1.0 | 1.7 | 1.4 | 1.5 | 1.0 | 1.8 | 0.7 | 27 | 1.7 | 1.7 | 39 |
| Blocking resistance, Collapse ratio % | 97 | 90 | 93 | 97 | 99 | 97 | 85 | 67 | 77 | 45 | 82 |
| Particle shape, Visual observation | Spherical form | Spherical form | Spherical form | Spherical form | Spherical form | Spherical form | Spherical form | Substantially spherical form | Substantially spherical form | Irregular form | Irregular form |
| Turbidity of supernatant in receiving tank at bottom of granulating tower, Visual observation | Clear | Clear | Clear | Clear | Clear | Clear | Clear | Clear | Clear | Opaque | Clear |

Examples 1, 5, and 6 showed that spherical coagulated latex particles could be reliably produced by adding a water-soluble polymer compound having a physical gel-forming property to a polymer latex and, for example, spraying the resulting mixed latex into a gas-phase containing an inorganic salt or an acid in an aerosol form. In contrast, Comparative Example 1 showed the following: Even in a gas-phase containing a coagulant in an aerosol form, when the polymer latex did not contain a water-soluble polymer compound having a physical gel-forming property, the coagulated latex particles were collapsed in the receiving tank at the bottom of the tower, thereby the aqueous solution in the receiving tank became opaque. As a result, the powder properties were deteriorated. In addition, Comparative Example 2 showed the following: Even when a water-soluble polymer compound having a physical gel-forming property was added to the polymer latex, in a gas-phase that did not contain an inorganic salt or an acid in an aerosol form, spherical coagulated latex particles could not be produced. Referring to Examples 1, 2, 3, and 9, when the amount of the water-soluble polymer compound having a physical gel-forming property was 0.01 to 1.8 parts by weight relative to 100 parts by weight of the polymeric solid content of the polymer latex, coagulated latex particles having more satisfactory powder properties could be produced.

Furthermore, referring to Examples 4 and 8, when the spraying or dropping position of the mixed latex was set to at least 1 m from the liquid level, a sufficient time for contacting with the coagulant could be provided. Consequently, coagulated latex particles having more satisfactory powder properties could be produced.

Table 2 shows flowability indices of dried powders of coagulated latex particles prepared in Example 1 and Comparative Example 1.

[Table 2]

|  | Example 1 | Comparative Example 1 |
|---|---|---|
| Latex | A | A |
| Sodium alginate Parts by weight | 0.4 | Not used Not used |
| Spraying position of latex, Height from liquid level m | 5.0 | 5.0 |
| Spray of coagulant | Sprayed | Sprayed |
| Angle of repose Degree | 40 | 47 |
| Compressibility % | 14 | 21 |
| Angle of spatula Degree | 57 | 59 |
| Uniformity % | 2.8 | 2.2 |
| Comprehensive evaluation | Good | Fair |

Referring to the results in Table 2, in Example 1 in which a water-soluble polymer compound having a physical gel-forming property was added, the flowability indices of the powder were significantly improved compared with Comparative Example 1 in which the water-soluble polymer compound was not added.

**Claims**

1. A process for producing coagulated latex particles comprising:

   spraying or dropping a polymer latex containing a water-soluble polymer compound having a physical gel-forming property into a gas-phase containing an inorganic salt and/or an acid in an aerosol form; and
   dropping or feeding the droplets of the polymer latex into an aqueous phase.

2. The process for producing coagulated latex particles according to claim 1, wherein the polymer latex containing a water-soluble polymer compound having a physical gel-forming property comprises a polymer latex containing 100 parts by weight of the polymeric solid content and 0.01 to 1.8 parts by weight of the water-soluble polymer compound having a physical gel-forming property.

3. The process for producing coagulated latex particles according to claim 1 or claim 2, wherein the water-soluble polymer compound having a physical gel-forming property is at least one compound selected from hydroxyethylmethylcellulose, hydroxypropylmethylcellulose, carboxymethylcellulose, water-soluble alginic acid derivatives, agar, gelatin, carrageenan, glucomannan, pectin, curdlan, gellan gum, and polyacrylic acid derivatives.

4. The process for producing coagulated latex particles according to any one of claims 1 to 3, wherein the gas-phase contains 0.2 to 20 parts by weight of the inorganic salt and/or the acid relative to 100 parts by weight of the polymeric solid content.

5. The process for producing coagulated latex particles according to any one of claims 1 to 4, wherein the inorganic salt is at least one salt selected from sodium salts, potassium salts, calcium salts, magnesium salts, aluminum salts, iron salts, barium salts, zinc salts, copper salts, potassium alum, and iron alum.

6. The process for producing coagulated latex particles according to any one of claims 1 to 4, wherein the acid is at least one inorganic acid selected from hydrochloric acid, sulfuric acid, nitric acid, and phosphoric acid and/or at least one organic acid selected from acetic acid and formic acid.

7. The process for producing coagulated latex particles according to claim 3, wherein the water-soluble polymer compound having a physical gel-forming property is a water-soluble alginic acid derivative.

8. The process for producing coagulated latex particles according to claim 5, wherein the inorganic salt is a calcium salt.

9. The process for producing coagulated latex particles according to any one of claims 1 to 8, wherein the distance between the spraying or dropping position of the polymer latex and the liquid level of the aqueous phase is 1 m or more.

10. The process for producing coagulated latex particles according to any one of claims 1 to 9, wherein the polymer latex sprayed or dropped into the gas-phase has a volume-average droplet size of 50 $\mu$m to 5 mm.

11. The process for producing coagulated latex particles according to any one of claims 1 to 10, wherein the polymer latex has a polymeric solid content of 10 to 55 percent by weight.

## INTERNATIONAL SEARCH REPORT

| | International application No. |
|---|---|
| | PCT/JP2005/022816 |

A. CLASSIFICATION OF SUBJECT MATTER
*C08J3/12*(2006.01), *C08F6/22*(2006.01)

According to International Patent Classification (IPC) or to both national classification and IPC

B. FIELDS SEARCHED

Minimum documentation searched (classification system followed by classification symbols)
C08J3/00-3/28, C08F6/00-6/28

Documentation searched other than minimum documentation to the extent that such documents are included in the fields searched
Jitsuyo Shinan Koho        1922-1996    Jitsuyo Shinan Toroku Koho    1996-2006
Kokai Jitsuyo Shinan Koho  1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 52-3637 A (KANEKA Corp.), 12 January, 1977 (12.01.77), Full text & GB 1516476 A | 1-11 |
| Y | JP 53-30647 A (KANEKA Corp.), 23 March, 1978 (23.03.78), Full text & GB 1588467 A | 1-11 |
| Y | JP 33-6093 B1 (Toa Gosei Kagaku Kogyo Kabushiki Kaisha), 08 August, 1958 (08.08.58), Full text (Family: none) | 1-11 |

| ☒ | Further documents are listed in the continuation of Box C. | ☐ | See patent family annex. |

\* Special categories of cited documents:
"A" document defining the general state of the art which is not considered    to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 March, 2006 (01.03.06) | 14 March, 2006 (14.03.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
|---|
| PCT/JP2005/022816 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 52-37987 A (Toyo Soda Manufacturing Co., Ltd.), 24 March, 1977 (24.03.77), Claim 1; page 2, lower left column, line 9 to lower right column, line 12 (Family: none) | 1,3-11 |
| A | JP 59-84922 A (Mitsubishi Monsanto Kabushiki Kaisha), 16 May, 1984 (16.05.84), Full text (Family: none) | 1-11 |
| A | JP 2004-300426 A (Kansai University), 28 October, 2004 (28.10.04), Full text (Family: none) | 1-11 |

Form PCT/ISA/210 (continuation of second sheet) (April 2005)

**EP 1 840 154 A1**

## REFERENCES CITED IN THE DESCRIPTION

**Patent documents cited in the description**

- JP 53030647 A
- JP 60217224 A
- JP 52037987 A

- JP 2002363372 A
- JP 11166091 A
- JP 2001354824 A

**Non-patent literature cited in the description**

- *Chemical Engineering,* 1965, vol. 18, 163-168